# EUROPEAN PATENT APPLICATION

(11) **EP 4 560 516 A1**
(43) Date of publication of application: **28.05.2025**
(21) Application number: 23211417.3
(22) Date of filing: 22.11.2023
(51) Int. Cl.: G06F 30/15, G06F 111/04, G06F 111/20, G06Q 30/0601

(54) **STEERING A 3D-PRODUCT BY SELECTING FUNCTIONAL REQUIREMENTS (SYSTEM ENGINEERING) FROM AN OFFER DATABASE**

(71) Applicant: Airbus Operations GmbH, 21129 Hamburg (DE)
(72) Inventor: ZECHERU, Mihai Ioan, 21129 Hamburg (DE)
(74) Representative: LKGLOBAL Lorenz & Kopf Patentanwalt Attorney at Law PartG mbB

(57) **Abstract**

The present disclosure refers to a method, wherein a 3D-product (38) is automatically synthesized from 3D-parametric models (36) comprising all physical product features (30) and wherein the 3D-product (38) is then steered by automatically altering design parameters (42) of the 3D-product (38), until it meets a configured functional product specification (22) while fitting a pre-determined 3D-space (40).

The present disclosure further refers to a system (48) configured to run the method.

## Description

### Technical Field

The present disclosure refers to methods and systems of creating a 3D-product.

### Technical Background

Complex technical products, such as aircraft, are nowadays designed and complex and distributed processes. Initially, the customer chooses a certain model and serious of the aircraft and specifies the layout of the aircraft according to his needs. Based on that, the customer and manufacturer of the aircraft normally agree on the desired aircraft by a contract.

For raising a model of this aircraft, according to the customer specifications, three dimensional models (3D) are known to be manually taken from different databases and adapted to the specific technical requirements. This process can take a lot of time, normally ranging within a couple of months.

Based on that, there is a need of reducing the required time and development effort.

### Summary

It may be seen as an object of the invention, to provide a method that allows for raising a technically feasible 3D-model of a product easily and quickly.

A method according to the features of the independent claim is provided. Further aspects and embodiments are evident from the dependent claims and from the following description.

According to an aspect of the present disclosure, a method of steering a 3D-product by selecting functional requirements from an offer database is provided, the method comprising the following steps:
A) Accessing the offer database and selecting a configurable functional product platform;
B) Selecting a plurality of functional requirements from the offer database to pre-configure the functional product platform;
C) Accessing a product functions database and activating functions corresponding to the selected plurality of functional requirements;
D) Deriving, from the pre-configured functional product platform, a configured functional product specification, additionally activating a number of mandatory functions stored in the product functions database in dependency on the activated functions of step C); and
E) Accessing a physical product feature database, comprising a configurable physical product feature structure;
F) Configuring said physical product feature structure by selecting physical product features corresponding to the configured functional product specification; and
G) Accessing a 3D-model parametric database, comprising 3D-parametric models corresponding to the physical product features of the configurable physical product feature structure;
H) Synthesizing a 3D-product from the 3D-parametric models within a 3D-space being pre-determined by the configurable functional product platform, said 3D-product comprising all physical product features of the configured physical product feature structure; and wherein the method further comprises:
I) Steering the 3D-product by automatically altering at least one design parameter of the 3D-product, until it meets the configured functional product specification within said 3D-space.

By steering the 3D-product end-to-end based on the initially selected functional requirements, the time to raise the 3D-product can be significantly reduced. If sufficient computing power is provided, this could even be done in real-time.

In an embodiment, the functional requirements selected in step B) comprise one or more of the following: a type of function, a location of the function in a product layout, a performance of the function.

Function, location and performance of the function are often customized in the product development process. Thus, the disclosed method offers quick and comprehensive access to a corresponding 3D-product.

In an embodiment, the automatically altered design parameter or parameters in step I) comprise one or more of the following: a geometric property of a part or assembly of a 3D-parametric model, a position or orientation of a 3D-parametric model in the 3D-product, switching to a different 3D-parametric model due to a performance requirement.

In an embodiment, the method is repeated starting at least from step B), whereby at least one functional requirement or mandatory function is re-configured.

This way, later modifications can be implemented quickly and easily.

In an embodiment, the 3D-product meeting the configured functional product specification in step I) is transmitted to a production system and the production system is controlled to produce a product corresponding to the 3D-product.

As manufacturing data can be directly derived from three-dimensional product data, it would even be possible, to steer the production system end to end, as well.

In an embodiment, the 3D-product is an aircraft. Since an aircraft is a very complex technical product, the benefits of the presented method can be exploited at a high degree in this context.

Another aspect of the present disclosure refers to a system, of steering a 3D-product by selecting functional requirements from an offer database, said system being designed and configurable to run a method according to the present disclosure.

In an embodiment, the system comprises:
- an offer database, wherein at least one configurable functional product platform and a plurality of selectable functional requirements are stored; and further
- a product functions database, wherein activatable functions corresponding to the selectable functional requirements are stored along with activatable mandatory functions dependent thereon; and further
- one or more algorithms, designed and configurable to create a pre-configured functional product platform from the product functions database, based on an activation of selected functional requirements and mandatory functions, and to derive a configured functional product specification therefrom; and further
- a physical product feature database, comprising a configurable physical product feature structure; and further
- an algorithm designed and configurable to configure said physical product feature structure by selecting physical product features corresponding to the configured functional product specification; and further
- a 3D-model parametric database, comprising 3D-parametric models corresponding to the physical product features of the configurable physical product feature structure; and further
- a generative design algorithm designed and configurable to synthesize a 3D-product from the 3D-parametric models within a 3D-space being predetermined by the configurable functional product platform, said 3D-product comprising all physical product features of the configured physical product feature structure, and to steer the 3D-product by automatically altering at least one design parameter of the 3D-product, until it meets the configured functional product specification within said 3D-space.

In an embodiment, the offer database is provided on a first provider data processing unit, remotely accessible by a customer data processing unit via a network, and wherein the product functions database, the physical product feature database and the 3D-model parametric database are provided on the first provider data processing unit or on additional provider data processing units, communicatively connectable to any provider processing unit or to the customer data processing unit via the network.

In an embodiment, the at least one algorithm to access the product functions database and to derive the configured functional product specification, the algorithm to configure the physical product feature structure and the generative design algorithm to synthesize and steer the 3D-product are comprised by one or more provider data processing units, with said algorithm to derive the configured functional product specification being accessible by the customer data processing unit via the network.

Summarized again in other words, the present disclosure refers to a method, wherein a 3D-product is automatically synthesized from 3D-parametric models comprising all physical product features and wherein the 3D-product is then steered by automatically altering design parameters of the 3D-product, until it meets a configured functional product specification while fitting a pre-determined 3D-space. The present disclosure further refers to a system configured to run the method.

### Brief description of the drawings

The present invention will hereinafter be described in conjunction with the following figures, wherein:
- Fig. 1: shows a flow chart of a method of steering a 3D-product;
- Fig. 2: shows a 3D-product steered in the method; and
- Fig. 3: shows a system of steering a 3D-product.

### Detailed description of exemplary embodiments

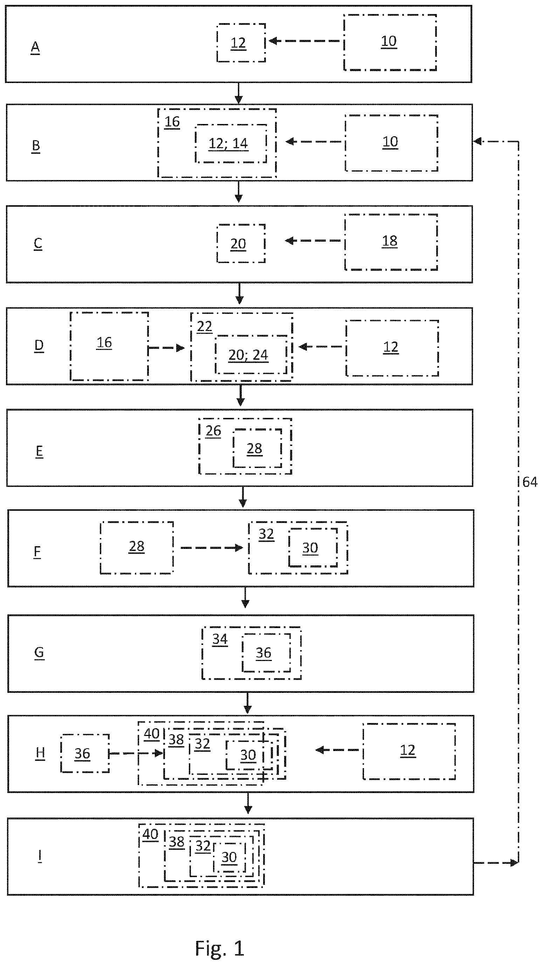

Fig. 1 shows a flow chart of a method of steering a 3D-product 38 by selecting functional requirements 14 from an offer database 10. The following is based on an example, wherein said 3D-product 38 is an aircraft 44. However, the following is also applicable to other 3D-products.

The method comprises a step A), wherein the offer database 10 is accessed and a configurable functional product platform 12 is selected. The offer database 10 may also be referred to as a catalogue. The selected configurable functional product platform 12, for example, comprises a certain model of a product, to which the 3D-product 38 relates. It may also comprise a series of this model. In case of an aircraft 44, a certain aircraft model may be selected and optionally a certain series of the aircraft model, for example a long or short series of the aircraft model.

In a step B) of the method, a plurality of functional requirements 14 is selected from the offer database 10 to pre-configure the functional product platform 12. As a result, a pre-configured functional product platform 16 is achieved. Functional requirements 14 may also be referred to simply as functions 20 or system functions, because the transition between a functional requirement 14 and a function 20 may be floating. Just as an example, a functional requirement 14 of a total number of passengers to be accommodated by the aircraft 44 may also be expressed as a number of seating functions. Further examples for functional requirements 14 may be enumerated as a quantity of beverages to be provided (quantity of galleys/kitchens of a certain size), a quantity of enclosed and safe spaces for physical needs (such as a number lavatories), a quantity of storage space for luggage (such as a number of overhead storage compartments), access to wireless internet during flight, an allocation of functional areas (such as economy class, optional business class or first class) and many other functions, such as an additional bar or an allocation of seats of the respective classes and other functions in an layout of the aircraft 44.

In a step C) of the method, a product functions database 18 is accessed and functions 20 are activated that correspond to the selected plurality of functional requirements 14, as exemplarily described above. The product functions database 18 may comprise a system engineering model of the system of interest, in the present example the aircraft 44, respectively.

In a step D) of the method, from the pre-configured functional product platform 16, a configured functional product specification 22 is derived. The configured functional product specification 22 additionally comprises a number of activated mandatory functions 24 stored in the product functions database 18 in dependency on the activated functions 20 of step C). The configured functional product specification 22 implies the pre-configured functional product platform 16 and also the mandatory functions 24, such as a number of mandatory galleries, lavatories and emergency equipment, that cannot be disregarded by the customer if the aircraft 44 shall accommodate a certain number of passengers (as a selected functional requirement 14).

In a step E) of the method, a physical product feature database 26 is accessed, comprising a configurable physical product feature structure 28. The configurable physical product feature structure 28 may be referred to as a physical feature tree including variants for a variety of functional requirement 14, which is configured by choosing from the tree those variants needed by the configured functional product specification 22. Examples may be given as selecting from the tree a specific large capacity lavatory for a long-distance aircraft or a specific small capacity lavatory for a short-distance aircraft, for example.

In a step F) of the method, said physical product feature structure 28 is configured by selecting physical product features 30 corresponding to the configured functional product specification 22. Here, for example, a specific large capacity lavatory is selected, because the aircraft 44 shall be a long-distance aircraft, according to the configured functional product specification 22. As a result, a configured physical product feature structure 32 is achieved.

In a step G) of the method, a 3D-model parametric database 34 is accessed. The 3D-model parametric database 34 comprises 3D-parametric models 36 corresponding to the physical product features 30 of the configurable physical product feature structure 28. The 3D-parametric models 34 correspond to the physical product features 30, wherein the 3D-model parametric database 34 generally comprises a library of a variety of existing 3D-paramteric models 36 of all the different variants.

In a step H) of the method, the actual 3D-product 38, herein the aircraft 44, is synthesized from these 3D-parametric models 36. The 3D-product 38 comprises all physical product features 30, wherein at this stage, this refers merely to the presence of the corresponding specific 3D-parametric models 36. This does not yet necessarily imply that the 3D-parametric models 36 are already fulfilling all required functions 20 at a desired location 70 in the 3D-product 38 or that a desired performance 72 could already be achieved. At this stage, technical conflicts with or between the physical product features 30 in the 3D-product 38 are not excluded, either.

At this stage, the 3D-parametric models 36 are at least arranged within a 3D-space 40 being pre-determined by the configurable functional product platform 12, with said 3D-product 38 comprising all physical product features 30 of the configured physical product feature structure 32. The 3D-space 40 being pre-determined by the configurable functional product platform 12 means, for example in case of the aircraft 44, that the model and series of the aircraft 44 pre-determine the maximum available space therein.

In step H) it may be the case, that the required 3D-parametric models 36 do not entirely fit the 3D-space 40, for example, as reflected by the 3D-product 38 exceeding the 3D-space 40 in the flow chart.

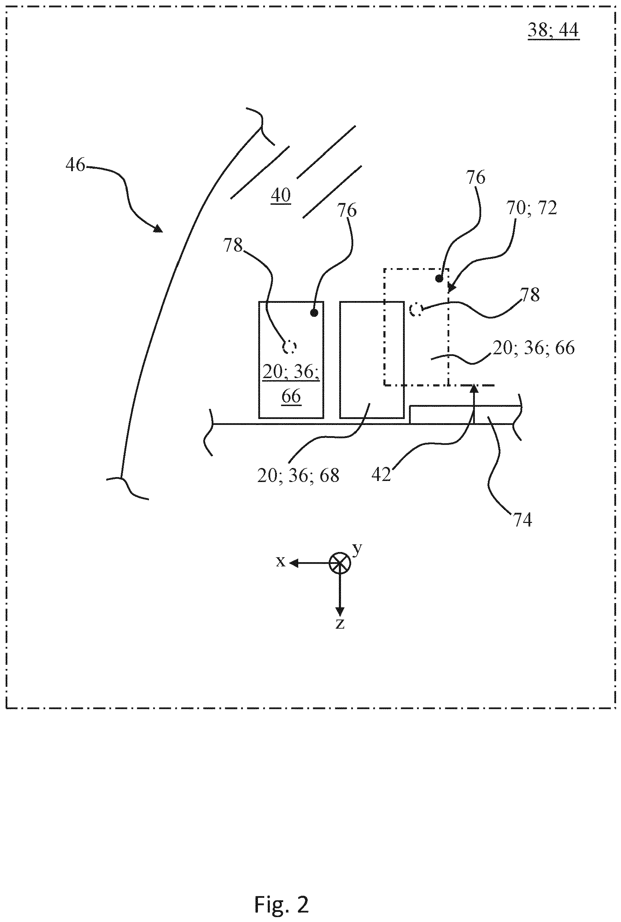

Finally, in a step I) of the method, the 3D-product 38 is steered by automatically altering at least one design parameter 42 (compare Fig. 2) of the 3D-product 38, until it meets the configured functional product specification 22 and at the same time entirely fits the given 3D-space 40. Steering the 3D-product 38, in other words, means that the customer defined functional requirements 14 are automatically translated into/projected onto a technically feasible 3D-product 38, automatically making the necessary modifications in the different 3D-parametric models 36 involved and in their interactions within each other and with the 3D-product 38 (e.g. aircraft 44) and its system boundaries.

Before explaining this in more detail with reference to Fig. 2, it shall be noted that the method may be repeated in an iteration 64, starting at least from step B), whereby at least one functional requirement 14 or mandatory function 24 may be re-configured. Then, the method is repeated as described above. For example, a seat arrangement may be amended or a mandatory lavatory may be re-located to a different side or a layout of the aircraft 44 may be completely amended.

Making additional reference to Fig. 2, the figure shows the 3D-product 38 in a simplified manner, which is the aircraft 44 in this example. The system boundaries are indicated by a dash-dot-line and the available 3D-space 40 is (among others) limited by an indicated inner wall of a cabin 46, merely as an illustrative example. The given coordinates, also merely as an example, may refer to a flight direction y, a vertical direction z, wherein a positive z coordinate points at a not shown floor of the aircraft 44, and by a horizontal direction x.

Merely as an example, a kitchen of the aircraft 44 is shown in Fig. 2, comprising a hot water supply 66 and a shelve 68. In the 3D-product 38 of step H), a 3D-parametric model 36 representing the hot water supply 66 may be arranged on the left of a 3D-parametric model 36 representing the shelve 68. However, according to the configured functional product specification 22, it may be desired to have the hot water supply 66 on the right of the shelve 68, as indicated by the hot water supply 66 illustrated by a dash-dot-line.

The functional requirements 14 selected in step B) may be specified by the customer by one or more of the following: the type of function 20 (referring to the function 20 as such, e.g. the function of hot water supply 66), the location 70 of the function 20 (here: desired at the right) in a product layout of the 3D-product 38 (here: the aircraft 44) and a performance 72 of the function 20 (e.g. a minimum volume flow of hot water). The type of function 20 may also be regarded as a system function and normally all these requirements are specified by a customer.

As can be seen in Fig. 2, the desired location 70 of the hot water supply 66 is not yet met in the 3D-product 38 of step H), because it is on the left instead of the right. This deviation may be due to the 3D-product 38 initially synthesized according to the configured physical product feature structure 32 being based on an available 3D-parametric model 36 of the kitchen, wherein the hot water supply 66 is on the left. It may also be due to an amendment (re-configuration in the iteration 64) of the configured functional product specification 22.

To meet the configured functional product specification 22, the location 70 of the hot water supply 66 must therefore be switched from left of the shelve 68 to right of the shelve 68 in the kitchen, as indicated by location 70.

To achieve this, the design parameters of the involved 3D-parametric models 36 are altered, until the 3D-product 38 fits the configured functional product specification 22 in terms of the function 20, the location 70 and the performance 72. The design parameters of the involved 3D-parametric models 36 may be altered over the product functions database 18 (i.e. system engineering model).

In case of the hot water supply 66, the corresponding 3D-parametric model 36 may be moved to the target location 70 on the right. However, this may lead to a conflict with the available 3D-space 40, as indicated by kitchen contour 74. To resolve the conflict, a design parameter 42 of the 3D-parametric model representing the kitchen assembly may be altered by increasing the height (here in negative z-direction) of the location 70 of the hot water supply 66 in the kitchen assembly on the right of the shelve 68.

However, this may lead to other conflicts. For example, a fixation screw 76 may now not be long enough to affix the hot water supply 66 on the right, due to differences in the underlying shape of the kitchen (not visible) behind the hot water supply 66 in the desired location 70 on the right. To also resolve this conflict, the length of the fixation screw 76, as a geometric property of the 3D-parametric model of the fixation screw 76, may be elongated.

However, this may lead to yet another conflict, because due to the increased height at location 70, a height of a hot water conduit 78 of the hot water supply 66 may also be increased. This may lead to a supply pump not being capable of delivering the required volume flow at a required pressure anymore, thus not achieving the desired performance 72.

To resolve this conflict as well, it may be switched to an entirely different 3D-parametric model of the supply pump (not shown) featuring a higher performance in terms of pumping power. Switching to an entirely different 3D-parametric model, a new simulation of the supply pump may be triggered within the function database 18 (i.e. system engineering model).

After all these measures have been taken, the 3D-product 38 may fit the configured functional product specification 22 and the given 3D-space 40, in this example.

The achieved technically feasible 3D-product 38 meeting the configured functional product specification 22 in step I) may optionally be transmitted to a production system (not shown) and the production system may be controlled to produce a product, an aircraft 44 in this example, corresponding to the 3D-product 38.

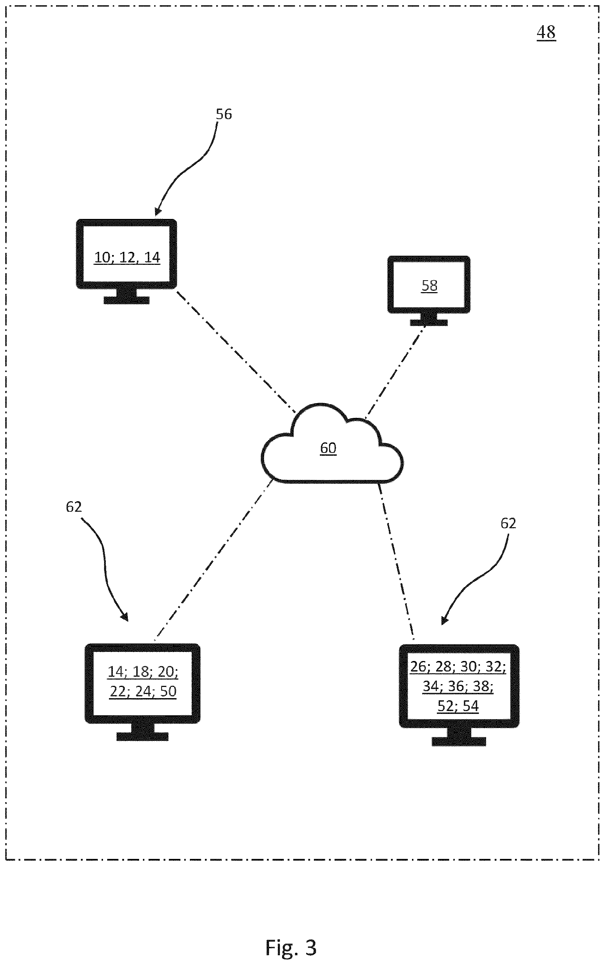

The described method may be run by a system 48 of steering the 3D-product 38 by selecting functional requirements 14 from the offer database 10. Said system 48 is exemplarily illustrated in Fig. 3 and is designed and configurable to run the described method.

The system 48 comprises the offer database 10, wherein at least one configurable functional product platform 12 and a plurality of selectable functional requirements 14 are stored. Further, the system 48 comprises the product functions database 18, wherein activatable functions 20 corresponding to the selectable functional requirements 14 are stored along with activatable mandatory functions 24 dependent thereon. Further, the system 48 comprises one or more algorithms 50, designed and configurable to create the pre-configured functional product platform 16 from the product functions database 18, based on an activation of selected functional requirements 14 and mandatory functions 24, and to derive a configured functional product specification 22 therefrom. Further, the system 48 comprises a physical product feature database 26, comprising a configurable physical product feature structure 28. Further, the system 48 comprises an algorithm 52 designed and configurable to configure said physical product feature structure 28 by selecting physical product features 30 corresponding to the configured functional product specification 22. Further, the system 48 comprises a 3D-model parametric database 34, comprising 3D-parametric models 36 corresponding to the physical product features 30 of the configurable physical product feature structure 28. Further, the system 48 comprises a generative design algorithm 54 designed and configurable to synthesize a 3D-product 38 from the 3D-parametric models 36 within a 3D-space 40 being predetermined by the configurable functional product platform 12, said 3D-product 38 comprising all physical product features 30 of the configured physical product feature structure 32, and to steer the 3D-product 38 by automatically altering at least one design parameter 42 of the 3D-product 38, until it meets the configured functional product specification 22 within said 3D-space 40. The generative design algorithm 54 may be referred to as a visual scripting algorithm.

In this example, the offer database 10 is provided on a first provider data processing unit 56, remotely accessible by a customer data processing unit 58 via a network 60.

The product functions database 18, the physical product feature database 26 and the 3D-model parametric database 34 may be provided on the first provider data processing unit 56 or, as exemplarily illustrated, on additional provider data processing units 62. The additional provider data processing units 62 are communicatively connectable to any of the provider processing units 56, 62 or to the customer data processing unit 58 via the network 60.

The at least one algorithm 50 to access the product functions database 18 and to derive the configured functional product specification 22, the algorithm 52 to configure the physical product feature structure 28 and the generative design algorithm 54 to synthesize and steer the 3D-product 38 may be comprised by one or more of these provider data processing units 56, 62. The generative design algorithm 54 may comprise an AI or generative-AI or multi target optimization (evolutionary) algorithm. Said algorithm 50 to derive the configured functional product specification 22 is accessible by the customer data processing unit 58 via the network 60, for example, via the internet. The provider data processing units 56, 62 may also communicate via a local area network forming part of network 60.

### Reference numerals

- 10: offer database
- 12: configurable functional product platform
- 14: functional requirement
- 16: pre-configured functional product platform
- 18: product functions database
- 20: function
- 22: configured functional product specification
- 24: mandatory function
- 26: physical product feature database
- 28: configurable physical product feature structure
- 30: physical product feature
- 32: configured physical product feature structure
- 34: 3D-model parametric database
- 36: 3D-parametric model
- 38: 3D-product
- 40: 3D-space
- 42: design parameter
- 44: aircraft
- 46: cabin
- 48: system
- 50: algorithm
- 52: algorithm
- 54: generative design algorithm
- 56: first provider data processing unit
- 58: customer data processing unit
- 60: network
- 62: additional provider data processing units
- 64: iteration
- 66: hot water supply
- 68: shelve
- 70: location
- 72: performance
- 74: kitchen contour
- 76: fixation screw
- 78: hot water conduit

## Claims

1. Method of steering a 3D-product (38) by selecting functional requirements (14) from an offer database (10), the method comprising the following steps:
A) Accessing the offer database (10) and selecting a configurable functional product platform (12);
B) Selecting a plurality of functional requirements (14) from the offer database (10) to pre-configure the functional product platform (12);
C) Accessing a product functions database (18) and activating functions (20) corresponding to the selected plurality of functional requirements (14);
D) Deriving, from the pre-configured functional product platform (16), a configured functional product specification (22), additionally activating a number of mandatory functions (24) stored in the product functions database (18) in dependency on the activated functions (20) of step C); and
E) Accessing a physical product feature database (26), comprising a configurable physical product feature structure (28);
F) Configuring said physical product feature structure (28) by selecting physical product features (30) corresponding to the configured functional product specification (22); and
G) Accessing a 3D-model parametric database (34), comprising 3D-parametric models (36) corresponding to the physical product features (30) of the configurable physical product feature structure (28);
H) Synthesizing a 3D-product (38) from the 3D-parametric models (36) within a 3D-space (40) being pre-determined by the configurable functional product platform (12), said 3D-product (38) comprising all physical product features (30) of the configured physical product feature structure (32); and wherein the method further comprises:
I) Steering the 3D-product (38) by automatically altering at least one design parameter (42) of the 3D-product (38), until it meets the configured functional product specification (22) within said 3D-space (40).

2. Method according to claim 1, wherein the functional requirements (14) selected in step B) comprise one or more of the following: a type of function, a location of the function in a product layout, a performance of the function.

3. Method according to any of the preceding claims, wherein the automatically altered design parameter or parameters (42) in step I) comprise one or more of the following: a geometric property of a part or assembly of a 3D-parametric model (36), a position or orientation of a 3D-parametric model (36) in the 3D-product (38), switching to a different 3D-parametric model (36) due to a performance requirement.

4. Method according to any of the preceding claims, wherein the method is repeated starting at least from step B), whereby at least one functional requirement (14) or mandatory function (24) is re-configured.

5. Method according to any of the preceding claims, wherein the 3D-product (38) meeting the configured functional product specification in step I) is transmitted to a production system and the production system is controlled to produce a product corresponding to the 3D-product (38).

6. Method according to any of the preceding claims, wherein the 3D-product (38) is an aircraft (44).

7. System (48), of steering a 3D-product (38) by selecting functional requirements (14) from an offer database (10), said system (48) being designed and configurable to run a method according to any of the preceding claims.

8. System (48) according to claim 7, comprising:
- an offer database (10), wherein at least one configurable functional product platform (12) and a plurality of selectable functional requirements (14) are stored; and further
- a product functions database (18), wherein activatable functions (20) corresponding to the selectable functional requirements (14) are stored along with activatable mandatory functions (24) dependent thereon; and further
- one or more algorithms (50), designed and configurable to create a pre-configured functional product platform (16) from the product functions database (18), based on an activation of selected functional requirements (14) and mandatory functions (24), and to derive a configured functional product specification (22) therefrom; and further
- a physical product feature database (26), comprising a configurable physical product feature structure (28); and further
- an algorithm (52) designed and configurable to configure said physical product feature structure (28) by selecting physical product features (30) corresponding to the configured functional product specification (22); and further
- a 3D-model parametric database (34), comprising 3D-parametric models (36) corresponding to the physical product features (30) of the configurable physical product feature structure (28); and further
- a generative design algorithm (54) designed and configurable to synthesize a 3D-product (38) from the 3D-parametric models (36) within a 3D-space (40) being predetermined by the configurable functional product platform (12), said 3D-product (38) comprising all physical product features (30) of the configured physical product feature structure (32), and to steer the 3D-product (38) by automatically altering at least one design parameter (42) of the 3D-product (38), until it meets the configured functional product specification (22) within said 3D-space (40).

9. System (48) according to claim 8, wherein the offer database (10) is provided on a first provider data processing unit (56), remotely accessible by a customer data processing unit (58) via a network (60), and wherein the product functions database (18), the physical product feature database (26) and the 3D-model parametric database (34) are provided on the first provider data processing unit (56) or on additional provider data processing units (62), communicatively connectable to any provider processing unit (56; 62) or to the customer data processing unit (58) via the network (60).

10. System (48) according to claim 9, wherein the at least one algorithm (50) to access the product functions database (18) and to derive the configured functional product specification (22), the algorithm (52) to configure the physical product feature structure (28) and the generative design algorithm (54) to synthesize and steer the 3D-product (38) are comprised by one or more provider data processing units (56; 62), with said algorithm (50) to derive the configured functional product specification (22) being accessible by the customer data processing unit (58) via the network (60).
